(19) **Europäisches Patentamt**

**European Patent Office**

**Office européen des brevets**

(11) **EP 0 951 341 B1**

(12) **EUROPÄISCHE PATENTSCHRIFT**

(45) Veröffentlichungstag und Bekanntmachung des Hinweises auf die Patenterteilung:
**25.04.2001 Patentblatt 2001/17**

(21) Anmeldenummer: **97954415.2**

(22) Anmeldetag: **17.12.1997**

(51) Int Cl.⁷: **B01D 53/94**, B01J 23/00

(86) Internationale Anmeldenummer:
**PCT/EP97/07091**

(87) Internationale Veröffentlichungsnummer:
**WO 98/26858 (25.06.1998 Gazette 1998/25)**

(54) **VERFAHREN ZUR REDUKTION VON STICKOXIDEN**

METHOD FOR THE REDUCTION OF NITROGEN OXIDES

PROCEDE DE REDUCTION D'OXYDES D'AZOTE

(84) Benannte Vertragsstaaten:
**DE ES FR GB IT SE**

(30) Priorität: **19.12.1996 DE 19653200**

(43) Veröffentlichungstag der Anmeldung:
**27.10.1999 Patentblatt 1999/43**

(73) Patentinhaber:
• **BASF AKTIENGESELLSCHAFT**
**67056 Ludwigshafen (DE)**
• **DaimlerChrysler AG**
**70567 Stuttgart (DE)**

(72) Erfinder:
• **FETZER, Thomas**
**D-67346 Speyer (DE)**
• **MORSBACH, Bernd**
**D-67069 Ludwigshafen (DE)**
• **KUMBERGER, Otto**
**D-68163 Mannheim (DE)**

• **HARTWEG, Martin**
**D-89155 Erbach (DE)**
• **ROITZHEIM, Rolf-Dirc**
**D-89160 Dornstadt (DE)**
• **SEIBOLD, Andrea**
**D-89134 Blaustein (DE)**
• **WALZ, Leonhard**
**D-76437 Rastatt (DE)**

(74) Vertreter: **Isenbruck, Günter, Dr. et al**
**Patent- und Rechtsanwälte,**
**Bardehle-Pagenberg-Dost-Altenburg-Geissler-I**
**senbruck**
**Theodor-Heuss-Anlage 12**
**68165 Mannheim (DE)**

(56) Entgegenhaltungen:
**EP-A- 0 362 960       EP-A- 0 685 253**
**EP-A- 0 791 390       WO-A-94/02244**

**Beschreibung**

Die Erfindung betrifft die Verwendung bestimmter Katalysatoren zur Reduktion von Stickoxiden ($NO_x$) sowie ein entsprechendes Verfahren. Die Stickoxide stammen vornehmlich aus Verbrennungsabgasen, insbesondere von Verbrennungsmotoren wie Dieselmotoren.

Bei der Verbrennung von Kohlenwasserstoffen mit Luft als Oxidationsmittel entstehen insbesondere bei einem Luftüberschuß und bei hohen Temperaturen Stickoxide durch Oxidation des in der Luft enthaltenen Stickstoffs. Beispiele solcher Stickoxide sind NO, $NO_2$, $NO_3$, $N_2O_3$, $N_2O_4$ und $N_2O_5$. Als Schadstoffe sollen die Stickoxide möglichst vollständig aus den Verbrennungsabgasen entfernt werden, um eine Umweltbelastung zu vermeiden. Während Kraftwerks- und Industrieemissionen durch den Einsatz von Abgasreinigungsanlagen immer stärker zurückgehen, gewinnt die Verminderung des Schadstoffanteils in Kraftfahrzeugabgasen immer mehr an Bedeutung, vor allem aufgrund der Zunahme der Anzahl an Kraftfahrzeugen.

Zur Verringerung der $NO_x$-Emissionen von Kraftfahrzeugmotoren sind viele Lösungen vorgeschlagen worden. Wirksame Lösungen zur Verminderung der $NO_x$-Mengen müssen eine Vielzahl von Kriterien erfüllen, beispielsweise insbesondere bei Verwendung von Katalysatoren:

- Hoher Umsatz, d.h. weitgehende $NO_x$-Entfernung, auch bei hoher und niedriger Temperatur und bei häufigem Lastwechsel im Betrieb
- Vermeidung der Verwendung von Hilfsstoffen wie Ammoniak oder Harnstoff
- Niedrige Herstellungs- und Betriebskosten
- Lange Standzeit
- Geringe $N_2O$-Erzeugung
- Hohe mechanische Katalysatorstabilität

Eine Reihe von Katalysatoren zur Reduktion von Stickoxiden sind vorgeschlagen worden.

In der EP-A-0 687 499 sind Spinell-Katalysatoren aus einem Kupfer, Zink und Aluminium aufweisenden Spinell zur Reduktion von Stickoxiden beschrieben.

In der US 3,974,255 ist ein Magnesiumaluminatspinell-Katalysator beschrieben, der mit Platin beschichtet ist. Der Katalysator wird zur Reduktion von $NO_x$ in Abgasen aus Verbrennungsmotoren eingesetzt.

In der EP-B-0 494 388 ist ein Verfahren zur Entfernung von Stickoxiden aus einem Abgas beschrieben, bei dem als Katalysator ein polyvalentes Metallphosphat, ein polyvalentes Metallsulfat oder ein Spinellaluminat eines Übergangsmetalls der 4. Periode des Periodensystems eingesetzt wird. Insbesondere wird ein Kobaltaluminat-Katalysator beschrieben, der durch gemeinsame Fällung von Kobaltnitrat und Aluminiumnitrat, anschließende Trocknung und Calcinieren hergestellt wird.

In JP-A2-08024648 sind Katalysatoren zur Entfernung von Stickoxiden aus einem Abgas beschrieben. Der Katalysator weist beispielsweise die Zusammensetzung $Ag_{0,01}P_{0,01}Pr_{0,01}Cu_{0,2}Zn_{0,5}Al_{2,0}$ auf, wobei zusätzlich $Fe_{0,02}Co_{0,02}$ oder 0,01 % MgO vorliegen können. Der Katalysator wird hergestellt durch Zusammenmischen der Nitrate von Ag und Pr mit $H_3PO_4$ und Eintragen dieses Gemisches in Oxidgemische von Cu, Zn und Al in Gegenwart von wäßrigen Lösungen von Ammoniak oder Ammoniumcarbonat oder Ammoniumsulfat. Die Calcinierung wird bei Temperaturen von 500°C bzw. 800°C durchgeführt. Der Silbergehalt der Katalysatoren beträgt 0,67 Gew.-%.

Ferner sind Katalysatoren zur katalytischen Zersetzung von Distickstoff-Monoxid ($N_2O$) bekannt. In der DE-A-42 24 881 sind ein silberhaltiger Aluminiumoxid-Trägerkatalysator und ein Verfahren zur katalytischen Zersetzung von reinem oder in Gasgemischen enthaltenem Distickstoff-Monoxid beschrieben, bei dem Distickstoff-Monoxid selektiv zersetzt wird, ohne daß andere Stickoxide in nennenswertem Umfang in die Elemente zersetzt werden. Als Katalysator können Kupfer/Zink/Aluminium-Spinelle eingesetzt werden, die mit Silber dotiert sind. Dabei wird beispielsweise ein Aluminiumoxid-Träger mit einer Lösung aus Kupfernitrat und Zinknitrat imprägniert, getrocknet, calciniert und sodann mit einer Lösung von Silbernitrat imprägniert, getrocknet und calciniert.

WO 94/02244 betrifft silberhaltige Aluminiumoxid-Trägerkatalysatoren und Verfahren zur Zersetzung von Distickstoffmonoxid. In dem beschriebenen Verfahren wird Distickstoffmonoxid zersetzt, ohne daß dabei die höheren Stickstoffoxide abgebaut werden. Die eingesetzten Katalysatoren enthalten neben Silber- und Aluminiumoxid auch Kupferoxid. Kupfer- und Aluminiumoxid können in Form der Mischphase $CuAl_2O_4$ vorliegen. Als Promotor kann ZnO eingesetzt werden. Silber ist als metallische Aktivkomponente in den Katalysatoren enthalten. In den Ausführungsbeispielen werden Aluminiumoxid, Kupferoxid und Silber enthaltende Katalysatoren aufgeführt. In Beispiel 3 wird ein Aluminiumoxidträger mit Kupfernitratlösung, Zinknitratlösung und Silbernitratlösung imprägniert und kalziniert. Lediglich für Kupfer- und Aluminiumoxid wird das Vorliegen in einer Mischphase beschrieben. Zinkoxid ist ein Promotor und liegt ebenfalls nicht in einer Spinellphase vor.

Aufgabe der vorliegenden Erfindung ist es, gegenüber den bekannten Katalysatoren verbesserte Katalysatoren zur Reduktion von $NO_x$ bereitzustellen. Zudem soll ein Verfahren zur Reduktion von $NO_x$ insbesondere in Abga-

sen aus Verbrennungsmotoren bereitgestellt werden.

Die Aufgabe wird erfindungsgemäß gelöst durch Verwendung eines Katalysators aus

(a) 20 bis 97 Gew.-% $Al_2O_3$,
(b) 1 bis 40 Gew.-% CuO,
(c) 1 bis 50 Gew.-% ZnO,
(d) 1 bis 40 Gew.-% Ag,
(e) 0 bis 2 Gew.-% Pt,
(f) 0 bis 20 Gew.-% Oxiden, von seltenen Erdmetallen, Elementen der 3.

Nebengruppe des Periodensystems oder deren Gemischen,
bezogen auf das Gesamtgewicht der Komponenten (a) bis (e), das 100 Gew.-% ergibt,
wobei bis jeweils zur Hälfte des Gewichts der Komponente (a) durch $Fe_2O_3$, $Cr_2O_3$, $Ga_2O_3$ oder deren Gemische, der Komponente (b) durch CoO, der Komponente (c) durch MgO, der Komponente (d) durch Au und der Komponente (e) durch Pd, Ru, Os, Ir, Rh, Re oder deren Gemische ersetzt sein können, wobei die Komponenten (a), (b) und (c) ein Spinell bilden, das mit den Komponenten (d), (e) und (f) dotiert ist und wobei der Katalysator eine bimodale oder polymodale Porengrößenverteilung aufweist, wobei 40-99 % des Porenvolumens in Mesoporen und 1-60% des Porenvolumens in Makroporen vorliegen, zur Reduktion von $NO_x$.

Erfindungsgemäß wurde dabei gefunden, daß Katalysatoren, wie sie in der DE-A-42 24 881 beschrieben sind, zur Reduktion von $NO_x$ eingesetzt werden können.

Die erfindungsgemäß verwendeten Katalysatoren weisen dabei vorzugsweise 30 bis 80, besonders bevorzugt 40 bis 75, insbesondere 45 bis 65 Gew.-% $Al_2O_3$, vorzugweise 3 bis 35, besonders bevorzugt 5 bis 30, insbesondere 8 bis 25 Gew.-% CuO, vorzugsweise 2 bis 40, besonders bevorzugt 5 bis 30, insbesondere 10 bis 26 Gew.-% ZnO, vorzugsweise 2 bis 35, besonders bevorzugt 3 bis 30, insbesondere 5 bis 25 Gew.-% Ag und vorzugsweise 0 bis 1, besonders bevorzugt 0 bis 0,5, insbesondere 0 bis 0,1 Gew.-% Pt auf. Die Gewichtsangaben beziehen sich wie vorstehend beschrieben auf das Gesamtgewicht der Komponenten (a) bis (e), das 100 Gew.-% ergibt.

Vorzugsweise sind jeweils maximal 1/3, besonders bevorzugt maximal 1/5, insbesondere 1/10 des Gewichts der Komponenten (a),(b),(c),(d) und/oder (e) wie vorstehend beschrieben ersetzt. Bevorzugt ist keine der Komponenten (a),(b),(c),(d) und (e) ersetzt.

Als Komponente (f) kommen Oxide der seltenen Erdmetalle und der Elemente der 3. Nebengruppe des Periodensystems in Betracht, vorzugsweise Oxide von 3-wertigen seltenen Erdmetallen, insbesondere La und/oder Ce. Vorzugsweise liegt kein Pr im Katalysator vor.

Bevorzugt wird Komponente (f) in Mengen von 0 bis 15, besonders bevorzugt 0 bis 10, insbesondere 0 bis 5 Gew-%, bezogen auf das Gesamtgewicht der Komponenten (a) bis (e), eingesetzt. Vorzugsweise liegt keine Komponente (f) vor.

Besonders bevorzugt besteht der Katalysator aus den Komponenten (a) bis (e), und zwar nur aus $Al_2O_3$, CuO, ZnO, Ag und gegebenenfalls Pt.

Erfindungsgemäß wird eine Kupfer/Zink/Aluminium-Oxidverbindung verwendet, die allgemein wie folgt wiedergegeben werden kann: $Cu_aZn_bAl_2O_{3+a+b}$. Dabei sind a > 0, b > 0, a+b $\leq$ 1.

Die Komponenten (a), (b) und (c) bilden ein Spinell. Spinelle sind beispielsweise beschrieben in C.W. Correns, Einführung in die Mineralogie, Springer Verlag 1949, Seiten 77-80, H. Remy, Lehrbuch der Anorganischen Chemie, Akademische Verlagsgesellschaft Geest & Portig K.-G. Leipzig 1950, Seiten 308-311, Römpp, Chemielexikon, 9.Auflage 1995, Seite 4245. Spinelle leiten sich dabei formal vom $MgAl_2O_4$ ab. Dabei kann Magnesium durch andere zweiwertige Ionen wie Zink, Kupfer, Eisen ersetzt sein. Aluminium kann durch andere dreiwertige Ionen ersetzt sein, wie Eisen oder Chrom. Im Spinellgitter bilden die Sauerstoffatome eine kubischdichteste Kugelpackung entsprechend einem flächenzentrierten Gitter. Die Hälfte der oktaedrischen Lücken darin ist mit Aluminium besetzt, die andere Hälfte der Lücken ist leer. Ein Achtel der tetraedrischen Lücken ist mit Magnesium besetzt.

Bevorzugt liegt im wesentlichen ein Kupfer/Zink-Spinell vor. Bei a+b=1 liegen keine Leerstellen im Spinellgitter vor. $Al_2O_3$ kann als Matrix fungieren, in der die anderen Metalloxide vorliegen. Dies ist insbesondere bei a+b $\leq$ 1 der Fall.

Die erfindungsgemäßen Katalysatoren können geringe Mengen an $SiO_2$, $TiO_2$, $ZrO_2$, Talk und/oder Zementen aufweisen, sofern diese die Eigenschaften der Katalysatoren nicht wesentlich verändern.
Gemäß einer Ausführungsform ist der Katalysator frei von Phosphor, insbesondere, sofern Pr vorliegt.

Die erfindungsgemäßen Katalysatoren weisen ein Porenvolumen von 0,01 bis 1, vorzugsweise 0,01 bis 0,8, besonders bevorzugt 0,1 bis 0,7 ml/g auf. Dabei ist die Porengrößenverteilung bimodal oder polymodal. Die bimodalen oder polymodalen Katalysatoren weisen dabei Mesoporen und Makroporen auf. Mesoporen besitzen einen Durchmesser von weniger als 50 nm, Makroporen einen Durchmesser von 50 bis 10000 nm. Der Katalysator weist eine bimodale oder polymodale Porengrößenverteilung auf, wobei 40 bis 99%, vorzugsweise 50 bis 98%, besonders bevorzugt 55 bis 95% des Porenvolumens in Mesoporen und 1 bis 60%, vorzugsweise 2 bis 50%, besonders bevorzugt 5 bis 45% des Porenvolumens in Makroporen vorliegen. Besonders bevorzugt ist der Katalysator bimodal.

Bei höhermodalen Katalysatoren können auch Poren mit einem Durchmesser von mehr als 10.000 nm enthalten sein. Dabei beträgt der Anteil dieser Poren vorzugsweise 0,1 bis 20, besonders bevorzugt 1 bis 15% des Porenvolumens, wobei die vorstehenden Angaben für die Mesoporen und Makroporen sich auf das verbleibende Porenvolumen beziehen.

Vorzugsweise liegt bei Katalysatoren mit bimodaler oder polymodaler Porengrößenverteilung der größere Anteil des Porenvolumens in einem Porengrößenbereich von 10 bis 1000 nm.

Die Größe der im Katalysator enthaltenen Silberpartikel beträgt vorzugsweise 0,1 bis 200, besonders bevorzugt 5 bis 50 nm. Silber liegt dabei oberhalb von 300°C als Metall vor und kann unterhalb dieser Temperatur auch als Oxid vorliegen. Die vorstehenden Gewichtsangaben sind auf das Metall bezogen.

Das Porenvolumen und die Porenvolumenverteilung werden vorzugsweise durch Hg-Porosimetrie bestimmt. Die Größe der Silberpartikel wird beispielsweise mittels Linienbreitenmessung bei der Röntgenbeugung bestimmt.

Die BET-Oberfläche beträgt vorzugsweise 1 bis 200, besonders bevorzugt 20 bis 150, insbesondere 50 bis 100 $m^2$/g.

Die erfindungsgemäß verwendeten Katalysatoren können in jeder beliebigen Form vorliegen, beispielsweise als Pellets, Tabletten, die hohl oder massiv sein können; Granulat mit einem Durchmesser von vorzugsweise 0,5 bis 3 mm, Splitt, Wabenkörper usw. Die erfindungsgemäßen Katalysatoren können auch auf anderen Trägermaterialien, wie Glasfasermatten, keramischen oder metallischen Trägern vorliegen. Die Träger können dabei unterschiedlich geformt sein, beispielsweise gewellt oder gerollt sein. Die vorstehenden Mengenangaben beziehen sich dabei auf den eigentlichen Katalysator ohne den zusätzliche Träger. Für eine Anwendung im Automobilsektor weisen die erfindungsgemäß verwendeten Katalysatoren vorzugsweise eine Wabenform auf. Der Lochdurchmesser beträgt dabei vorzugsweise 0,1 bis 10 mm, insbesondere 0,5 bis 5 mm. Die Stegbreite beträgt vorzugsweise 0,1 bis 5 mm, insbesondere 0,3 bis 3 mm.

Die erfindungsgemäß verwendeten Katalysatoren können nach einem beliebigen geeigneten Verfahren hergestellt werden. Geeignete Verfahren sind beispielsweise beschrieben in der DE-A-42 24 881. Beispielsweise können AlOOH (Böhmit), CuO, ZnO und gegebenenfalls weitere Metalloxide in Gegenwart eines Bindemittels mit Wasser verknetet werden, zu Strängen extrudiert, getrocknet und calciniert werden. Die so hergestellten Katalysatorgrundkörper können mit einer wässrigen Lösung von Silbernitrat imprägniert werden. Die imprägnierten Katalysatoren werden sodann getrocknet und calciniert.

Anstelle der Metalloxide können die entsprechenden Hydroxide, Oxidhydrate, Carbonate, Salze organischer Säuren, Nitrate, Chloride, Sulfate oder Phosphate verwendet werden. Zur Herstellung von bimodalen oder polymodalen Katalysatoren kann man anstelle von AlOOH ein Gemisch aus AlOOH und $Al_2O_3$, vorzugsweise $\gamma$- oder $\delta$ - $Al_2O_3$ verwenden. Aluminiumoxid ($Al_2O_3$) unterschiedlicher Porengrößenverteilungen kann dabei eingesetzt werden.

Das Trocknen erfolgt vorzugsweise bei einer Temperatur von 10 bis 200°C, besonders bevorzugt 20 bis 150°C, insbesondere 30 bis 120°C. Das Calcinieren erfolgt bei einer Temperatur von weniger als 1100°C, vorzugsweise von 600 bis 900°C. Das Calcinieren nach Imprägnieren mit Silbernitratlösung erfolgt vorzugsweise bei einer Temperatur von 200 bis 800°C.

Die erfindungsgemäß verwendeten Katalysatoren werden vorzugsweise zur Reduktion von $NO_x$ in Verbrennungsabgasen eingesetzt. Die Reduktion des NO erfolgt durch Umsetzung mit einem Reduktionsmittel.

Die Erfindung betrifft dabei auch ein Verfahren zur katalytischen Reduktion von $NO_x$ in $NO_x$, $O_2$ und Kohlenwasserstoffverbindungen enthaltenden Gemischen, wobei die Reduktion in Gegenwart eines Katalysators erfolgt, wie er vorstehend definiert ist. Die Kohlenwasserstoffverbindungen dienen dabei als Reduktionsmittel.

Vorzugsweise ist das Gemisch ein Verbrennungsabgas, wobei das Verbrennungsabgas insbesondere aus Verbrennungskraftmaschinen oder Verbrennungsmotoren stammt.

Ein solches Abgas enthält unter anderem Stickoxide ($NO_x$), Sauerstoff ($O_2$), Wasserdampf und gegebenenfalls Kohlenwasserstoffverbindungen. Kohlenwasserstoffverbindungen sind beispielsweise sauerstoffhaltige Kohlenwasserstoffverbindungen, wie Alkohole, Ether, Aldehyde, Ketone, Epoxide u.s.w. Unter dem Begriff "Kohlenwasserstoffverbindungen" werden auch Kohlenwasserstoffe wie Alkane, Alkene, Alkine oder Aromaten zusammengefaßt. Statt der Kohlenwasserstoffverbindungen können auch CO oder $H_2$ eingesetzt werden. Bevorzugt werden zugesetzte Kohlenwasserstoffverbindungen verwendet. Beispielsweise können kurzkettige Kohlenwasserstoffe wie Propen dem Abgasstrom zudosiert werden. Es ist auch bevorzugt möglich, einen Teil des Treibstoffs beispielsweise bei einem Kraftfahrzeug dem Abgasstrom zuzuführen, so daß im Abgas Kohlenwasserstoffverbindungen vorliegen. Ein Beispiel einer ablaufenden Reaktion bei Verwendung von Propen als Kohlenwasserstoffverbindung ist in der nachstehenden Reaktionsgleichung wiedergegeben.

$$4\ NO_2 + NO + CH_3\text{-}CH{=}CH_2 \rightarrow 5/2\ N_2 + 3\ CO_2 + 3\ H_2O$$

Insbesondere Dieselabgase enthalten zusätzlich Sauerstoff, da die Verbrennung unter Luftüberschuß durchgeführt wird. Somit können noch weitere Umsetzungen stattfinden, bei denen organische sauerstoffhaltige Verbindungen gebildet werden.

Vorliegende Kohlenwasserstoffverbindungen können somit zum einen mit vorliegendem Sauerstoff, zum anderen mit vorliegenden Stickoxiden reagieren. Der erfindungsgemäß verwendete Katalysator katalysiert dabei vorzugsweise die Umsetzung von Kohlenwasserstoffen mit $NO_x$ im Vergleich zur Umsetzung von Kohlenwasserstoffen mit Sauerstoff.

Abgase, insbesondere von Dieselmotoren, enthalten neben $NO_x$ und Kohlenwasserstoffen weiterhin CO, gegebenenfalls Ruß, $SO_2$, sowie Wasserdampf, Sauerstoff, Stickstoff ($N_2$) und $CO_2$. Ein Dieselabgas kann die nachstehende Zusammensetzung aufweisen:

$NO_x$ 10 bis 10000, durchschnittlich 2000 ppm

Kohlenwasserstoffe 10 bis 2000, durchschnittlich 200 ppm

CO 10 bis 4000, durchschnittlich 100 ppm

Ruß 0 bis 1, durchschnittlich 0,3 g/l

Schwefeldioxid 0 bis 200, durchschnittlich 40 ppm

Wasserdampf 1,5 bis 8, durchschnittlich 7 Vol-%

Sauerstoff 3 bis 18, durchschnittlich 4 Vol-%

$CO_2$ 2 bis 15, durchschnittlich 3 Vol-%

Typische Katalysatorbelastungen liegen bei 20.000 bis 30.000, Spitzenbelastungen bis zu 100.000 $Nm^3$ Gas pro $m^3$ Katalysator pro Stunde. Die Erfindung wird nachstehend anhand von Beispielen näher erläutert.

Allgemeines Herstellungsverfahren für den Katalysator

Der erfindungsgemäß verwendete Katalysator kann analog dem in DE-A-42 24 881 beschriebenen Verfahren hergestellt werden.

Dabei werden beispielsweise 400 g AlOOH (Böhmit, Pural$^R$ SB von Condea), 50 g CuO, 154,5 g ZnO und 25 g Methylcellulose (Walocel$^R$ von Wolff, Walsrode) mit 270 g Wasser eine Stunde lang verknetet, zu Vollsträngen von 3 mm Durchmesser und 8 mm Länge extrudiert, getrocknet und 4 Stunden bei 800°C calciniert. Das nach dem Calcinieren erhaltene Material weist eine Oberfläche von 54 $m^2$/g auf. Die Porosität beträgt 0,32 ml/g.

Die anorganischen Bestandteile weisen die folgende Zusammensetzung auf: Cu: 0,63 mol (CuO:10 Gew.-%), Zn: 1,90 mol (ZnO: 28 Gew.-%),Al: 6.67 mol ($Al_2O_3$: 62 Gew.-%). Dies entspricht der allgemeinen Summenformel $Cu_{0.2}Zn_{0,6}Al_2O_{3,8}$.

108 g dieses Materials (Spinell) werden mit 51 ml einer wässrigen Lösung, die 30,2 g Silbernitrat enthält, imprägniert und eine Stunde liegengelassen. Das imprägnierte Material wird eine Stunde bei 120°C bis zur Gewichtskonstanz getrocknet und danach bei 600°C calciniert. Die so erhaltenen Katalysatorpellets enthalten 19,2 g metallisches Silber, entsprechend 17,8 Gew.-%.

In den nachstehenden Beispielen beziehen sich Prozentangaben auf das Gewicht, sofern nichts anderes angegeben.

**Beispiel 1**

Monomodaler Katalysator mit der Zusammensetzung 20% CuO, 20% ZnO, 45% $Al_2O_3$, 15% Ag

400 g AlOOH (Böhmit, Pural SB von Condea), 151 g CuO und 151 g ZnO sowie 30 g Methylcellulose (Walocel von Wolff, Walsrode) wurden mit 320 g Wasser eine Stunde lang verknetet, zu Vollsträngen von 3 mm Durchmesser und 8 mm Länge extrudiert, getrocknet und 4 Stunden bei 800°C calciniert.

640 g dieses Spinellkörpers wurden mit 178 g Silbernitrat in Form einer wässrigen 50%igen $AgNO_3$-Lösung imprägniert. Sodann wurde eine Stunde bei 120°C getrocknet und dann 4 Stunden bei 600°C calciniert.

Die so erhaltenen Pellets enthielten 15% Ag, 20% CuO, 20% ZnO und 45% $Al_2O_3$. Sie waren monomodal

und enthielten Poren, die zu 95% einen Durchmesser von 50-50000 nm aufwiesen. Die Gesamtporosität betrug 0,32 ml/g.

**Beispiel 2**

Bimodaler Katalysator mit 5% Ag, 15% CuO, 19% ZnO, 61% $Al_2O_3$

Der bimodale Katalysator wurde erhalten, indem eine Mischung aus AlOOH und $Al_2O_3$ statt nur AlOOH verwendet wurde.

611 g $Cu(NO_3)_2$ x 3 $H_2O$, 581 g Puralox$^R$ SCF-A 230 ($Al_2O_3$, hergestellt von Condea) und 322 g Pural SB (AlOOH, hergestellt von Condea) wurden für 3 Stunden gut vermischt. Der Trockenmasse wurde sodann soviel Wasser zugegeben, bis eine plastische Knetmasse entstand. Sodann wurden 45 g Ameisensäure eingetragen. Die Masse wurde für 70 Minuten geknetet, zu Strängen geformt, 16 Stunden bei 120°C getrocknet und 4 Stunden bei 800°C calciniert.

800 g des so erhaltenen Körpers wurden mit 373 g $Zn(NO_3)_2$ x 6 $H_2O$, das in Wasser gelöst und auf 400 1 Gesamtlösung ergänzt wurde, getränkt. Nach 1,5 Stunden Tränkzeit wurde für 16 Stunden bei 120°C getrocknet und für 4 Stunden bei 600°C calciniert.

Der Katalysator wurde wie in Beispiel 1 beschrieben mit einer 50%igen $AgNO_3$-Lösung getränkt, so daß der Katalysator in fertigem Zustand 5% Silber enthielt. Der Katalysator hatte die Zusammensetzung 5% Ag, 19% ZnO, 15% CuO, 61% $Al_2O_3$. Die BET-Oberfläche betrug etwa 100 $m^2$/g. Die Wasseraufnahme betrug etwa 0,5 ml/g, was einer ebenso großen Gesamtporosität entsprach.

**Beispiel 3**

Der Katalysator wurde analog Beispiel 2 hergestellt, wies jedoch folgende Zusammensetzung auf: 15% Ag, 17% ZnO, 13,6% CuO, 54,4% $Al_2O_3$.

**Beispiel 4**

Das Verfahren aus Beispiel 2 wurde wiederholt, jedoch wies der erhaltene Katalysator folgende Zusammensetzung auf: 25% Ag,15% ZnO, 12% CuO, 46% $Al_2O_3$.

**Beispiel 5**

Das Verfahren aus Beispiel 2 wurde wiederholt, jedoch wurde folgende Zusammensetzung erhalten: 15% Ag, 17% ZnO, 13,6% CuO, 54,3% $Al_2O_3$, 0,1% Pt. Die Dotierung mit Pt erfolgte durch Imprägnierung mit einer wäßrigen Platinnitratlösung. Diese Imprägnierung erfolgte gleichzeitig mit der Silbernitratimprägnierung, kann aber auch unabhängig erfolgen.

**Beispiel 6**

Der Katalysator wurde analog dem in Beispiel 2 beschriebenen Verfahren hergestellt, wies jedoch folgende Zusammensetzung auf: 15% Ag, 25,5% ZnO, 8,5% CuO, 51% $Al_2O_3$.

**Patentansprüche**

**1.** Verwendung eines Katalysators aus

(a) 20 bis 97 Gew.-% $Al_2O_3$,
(b) 1 bis 40 Gew.-% CuO,
(c) 1 bis 50 Gew.-% ZnO,
(d) 1 bis 40 Gew.-% Ag,
(e) 0 bis 2 Gew.-% Pt,
(f) 0 bis 20 Gew.-% Oxiden von seltenen Erdmetallen, Elementen der 3. Nebengruppe des Periodensystems oder deren Gemischen,

bezogen auf das Gesamtgewicht der Komponenten (a) bis (e), das 100 Gew.-% ergibt,

wobei bis jeweils zur Hälfte des Gewichts der Komponente (a) durch $Fe_2O_3$, $Cr_2O_3$, $Ga_2O_3$ oder deren Gemische, der Komponente (b) durch CoO, der Komponente (c) durch MgO, der Komponente (d) durch Au und der Komponente (e) durch Pd, Ru, Os, Ir, Rh, Re oder deren Gemische ersetzt sein können,
wobei die Komponenten (a), (b) und (c) ein Spinell bilden, das mit den Komponenten (d), (e) und (f) dotiert ist,
wobei der Katalysator eine bimodale oder polymodale Porengrößenverteilung aufweist, wobei 40 - 99 % des Porenvolumens in Mesoporen und 1 - 60 % des Porenvolumens in Makroporen vorliegen,
zur Reduktion von $NO_x$.

**2.** Verwendung nach Anspruch 1 oder 2, wobei das Porenvolumen des Katalysators 0,01 bis 1 ml/g beträgt.

**3.** Verwendung nach einem der vorstehenden Ansprüche zur Reduktion von $NO_x$ in Verbrennungsabgasen.

**4.** Verfahren zur katalytischen Reduktion von $NO_x$ in $NO_x$, $O_2$ und Kohlenwasserstoffverbindungen enthaltenden Gemischen, wobei die Reduktion in Gegenwart eines Katalysators erfolgt, wie er in einem der Ansprüche 1 oder 2 definiert ist.

**5.** Verfahren nach Anspruch 4, wobei das Gemisch ein Verbrennungsabgas ist.

**6.** Verwendung nach Anspruch 3 oder Verfahren nach Anspruch 5, wobei die Verbrennungsabgase aus Verbrennungskraftmaschinen oder Verbrennungsmotoren stammen.

**7.** Verwendung nach Anspruch 1, 3 oder 6 oder Verfahren nach Anspruch 4, 5 oder 6, wobei als Reduktionsmittel Kohlenwasserstoffverbindungen, CO oder $H_2$ dienen.

**Claims**

**1.** The use of a catalyst which comprises

(a) from 20 to 97 wt% of $Al_2O_3$,
(b) from 1 to 40 wt% of CuO,
(c) from 1 to 50 wt% of ZnO,
(d) from 1 to 40 wt% of Ag,
(e) from 0 to 2 wt% of Pt,
(f) from 0 to 20 wt% of oxides of rare earth metals, elements of the 3rd subgroup of the Periodic Table of the Elements or mixtures thereof, based on the total weight of the components (a) to (e), which adds up to 100 wt%,

wherein, in each case, up to half the weight of the component (a) may be replaced by $Fe_2O_3$, $Cr_2O_3$, $Ga_2O_3$ or mixtures thereof, of the component (b) by CoO, of the component (c) by MgO, of the component (d) by Au and of the component (e) by Pd, Ru, Os, Ir, Rh, Re or mixtures thereof,
and the components (a), (b) and (c) form a spinel which is doped with the components (d), (e) and (f),
and the catalyst has a bimodal or polymodal pore size distribution, 40 - 99 % of the pore volume being present in mesopores and 1 - 60 % of the pore volume being present in macropores,
for reducing $NO_x$.

**2.** The use as claimed in claim 1, wherein the pore volume of the catalyst is from 0.01 to 1 ml/g.

**3.** The use as claimed in either of the preceding claims for reducing $NO_x$ in combustion off-gases.

**4.** A process for the catalytic reduction of $NO_x$ in mixtures containing $NO_x$, $O_2$ and hydrocarbon compounds, the reduction taking place in the presence of a catalyst as defined in either of claims 1 and 2.

**5.** The process as claimed in claim 4, wherein the mixture is a combustion off-gas.

**6.** The use as claimed in claim 3 or process as claimed in claim 5, wherein the combustion off-gases come from internal-combustion motors or internal-combustion engines.

**7.** The use as claimed in claim 1, 3 or 6 or process as claimed in claim 4, 5 or 6, wherein hydrocarbon compounds,

CO or H$_2$ serve as reducing agent(s).

**Revendications**

1.  Utilisation d'un catalyseur consistant en

    a) 20 à 97 % en poids d'Al$_2$O$_3$,
    b) 1 à 40 % en poids de CuO,
    c) 1 à 50 % en poids de ZnO,
    d) 1 à 40 % en poids d'Ag,
    e) 0 à 2 % en poids de Pt,
    f) 0 à 20 % en poids d'oxydes des métaux des terres rares, d'éléments du troisième sous-groupe de la Classification Périodique ou leurs mélanges,

    par rapport au poids total des composants a) à e), représentant 100 % en poids, jusqu'à la moitié du poids du composant a) pouvant être remplacée par FeO$_3$, Cr$_2$O$_3$, Ga$_2$O$_3$ ou leurs mélanges, jusqu'à la moitié du poids du composant b) pouvant être remplacée par CoO, jusqu'à la moitié du poids du composant c) pouvant être remplacée par MgO, jusqu'à la moitié du poids du composant d) pouvant être remplacée par Au et jusqu'à la moitié du poids du composant e) pouvant être remplacée par Pd, Ru, Os, Ir, Rh, Re ou leurs mélanges,
    les composants a), b) et c) formant une spinelle qui est dopée par les composants d), e) et f),
    le catalyseur présentant une répartition bimodale ou polymodale des dimensions de pores, avec 40 à 99 % du volume de pores à l'état de mésopores et 1 à 60 % du volume de pores à l'état de macropores,
    pour la réduction des oxydes d'azote NO$_x$.

2.  Utilisation selon la revendication 1 ou 2, dans laquelle le volume de pores du catalyseur va de 0,01 à 1 ml/g.

3.  Utilisation selon une des revendications qui précèdent pour la réduction des NO$_x$ dans des gaz résiduaires de combustion.

4.  Procédé pour la réduction catalytique des NO$_x$ contenus dans des mélanges avec de l'oxygène et des composés hydrocarbonés, selon lequel la réduction est réalisée en présence d'un catalyseur tel que défini dans l'une des revendications 1 ou 2.

5.  Procédé selon la revendication 4, dans lequel le mélange est un gaz résiduaire de combustion.

6.  Utilisation selon la revendication 3 ou procédé selon la revendication 5 dans lequel les gaz résiduaires de combustion proviennent de génératrices à combustion ou de moteurs à combustion.

7.  Utilisation selon la revendication 1, 3 ou 6 ou procédé selon la revendication 4, 5 ou 6, dans lequel on utilise en tant qu'agents réducteurs des dérivés hydrocarbonés, CO ou H$_2$.